# FASCICULE DE BREVET EUROPEEN

(11) **EP 1 118 919 B1**
(45) Date de publication et mention de la délivrance du brevet: **15.01.2003**
(21) Numéro de dépôt: 01400130.9
(22) Date de dépôt: 17.01.2001
(51) Int. Cl.: G05B 19/12, B23Q 3/155

(54) **Machine d'usinage perfectionnée**
Verbesserte Werkzeugmaschine
Ameliorated machine tool

(30) Priorité: 20.01.2000 FR 0000707
(43) Date de publication de la demande: 25.07.2001
(73) Titulaire: Recoules S.A., 77330 Ozoir La Ferriere (FR)
(72) Inventeur: Desmoulins, Marcel, 77163 Mortcerf (FR)
(74) Mandataire: Domenego, Bertrand

(56) Documents cités:
- EP-A- 0 191 445
- EP-A- 0 537 352
- US-A- 5 014 794
- US-A- 5 751 586

## Description

La présente invention se rapporte à une machine pneumatique d'usinage destinée, en particulier, à être utilisée dans l'industrie aéronautique.

Les machines pneumatiques sont largement répandues et sont souvent préférées à des machines à entraînement électrique en raison de leurs performances.

Ainsi, on connaît, dans l'état de la technique, des machines pneumatiques d'usinage, du type comprenant une broche porte-outil, des moyens moteurs pneumatiques assurant l'entraînement de la broche et une unité centrale dans laquelle sont stockés des programmes de commande des moyens moteurs pour le déroulement de cycles d'usinage en fonction du type d'outil porté par la broche.

Dans ce type de machine, l'opérateur doit sélectionner un programme d'usinage spécifique, en fonction de la tache à réaliser, c'est-à-dire de l'outil qu'il a monté sur la broche.

On conçoit qu'une telle sélection est une perte de temps et constitue une source d'erreurs.

Un but de l'invention est de pallier ces inconvénients.

Elle a donc pour objet une machine d'usinage comprenant une broche porte-outil, des moyens moteurs assurant l'entraînement de la broche et, une unité centrale dans laquelle sont stockés des programmes de commande des moyens moteurs pour le déroulement de cycles d'usinage en fonction du type d'outil porté par la broche, caractérisée en ce que ladite broche est dotée de moyens de codage du type d'outil qu'elle porte et la machine est pourvue de moyens de lecture des moyens de codage raccordés à l'unité centrale pour fournir à cette dernière des informations portant sur l'outil monté sur la broche, et en ce que l'unité centrale comporte en outre des moyens de sélection parmi les programmes stockés dans l'unité centrale du programme correspondant à l'outil porté par la broche et dont les moyens de codage sont lus par les moyens de lecture.

La machine d'usinage selon l'invention peut en outre comporter une ou plusieurs des caractéristiques suivantes, prises isolément ou selon toutes les combinaisons techniquement possibles :
- les moyens de collage sont agencés sous la forme d'un ensemble de gorges annulaires ménagées sur la surfacé périphérique de la broche et les moyens de lecture sont constitués par des moyens de détection sans contact desdites gorges,
- les moyens de lecture des moyens de codage comportent un réseau de fibres optiques tournées vers les gorges et destinées à la détection de la présence desdites gorges sur la broche,
- le réseau de fibres optiques comprend des fibres optiques de détection de la présence desdites gorges et à chacune desquelles est associée une fibre optique d'éclairement de la surface périphérique de la broche portant lesdites gorges,
- chaque fibre optique d'éclairement associée à une fibre optique de détection de la présence d'une gorge est montée en faisceau avec la fibre optique de détection associée et assure son éclairement par réflexion sur la surface périphérique de la boche,
- chaque fibre optique d'éclairement et sa fibre optique de détection de la présence d'une gorge sont montées en regard l'une de l'autre à une distance de l'axe de la broche comprise entre la distance audit axe du fond de la gorge correspondante et celle de la surface extérieure de la broche,
- les moyens de sélection comprennent dans l'unité centrale des moyens de comparaison entre un mot élaboré à partir du signal véhiculé par le réseau de fibres optiques et un ensemble de mots stockés en mémoire dans l'unité centrale correspondant chacun à un type d'outil d'usinage et à chacun desquels est associé un programme d'usinage correspondant,
- elle comporte trois fibres optiques pour l'élaboration d'un mot de trois chiffres binaires servant à piloter le déroulement de programmes d'usinage correspondants,
- la broche porte-outil comporte en outre un code visuel destiné à indiquer à un opérateur le type d'outil à monter sur la broche, le type d'outil indiqué par le code visuel correspondant au type d'outil codé par les moyens de codage ; et
- les moyens moteurs assurent l'avance de la broche porte-outil et les programmes de commande sont des programmes de commande de l'avance de la broche porte-outil.

D'autres caractéristiques et avantages ressortiront de la description suivante, donnée uniquement à titre d'exemple, et faite en référence aux dessins annexés sur lesquels :
- la figure 1 est une vue en perspective d'une partie d'une machine d'usinage conforme à l'invention,
- la figure 2 est une vue de détail de la broche porte-outil sur laquelle sont ménagés les moyens de codage et des moyens de lecture de ces moyens de codage, et
- la figure 3 est une vue de détail de la broche porte-outil portant les moyens de codage auxquels est associé un autre mode de réalisation des moyens de lecture.

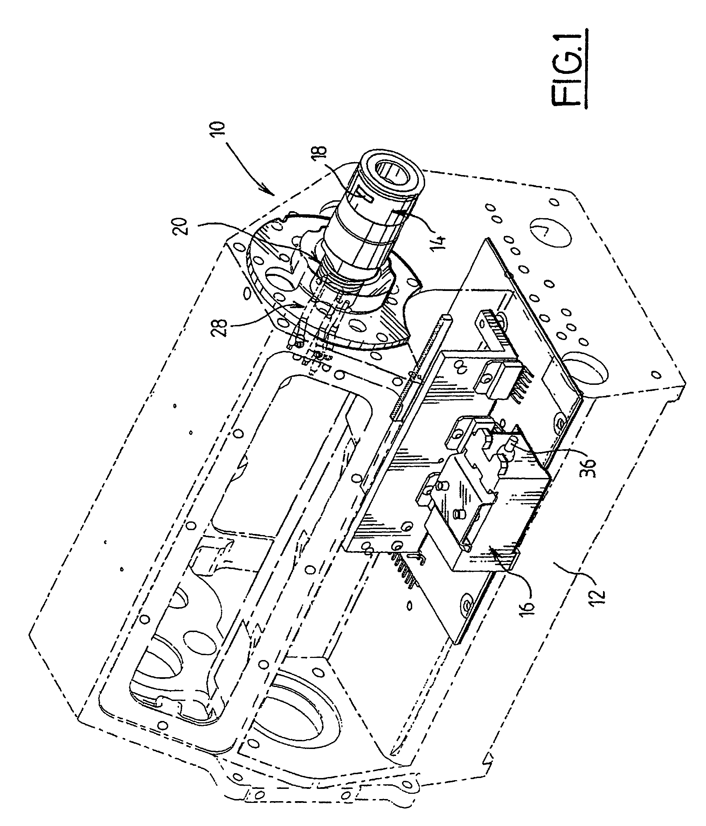

Sur la figure 1, on a représenté une vue en perspective du châssis d'une machine d'usinage conforme à l'invention, désignée par la référence numérique générale 10.

La machine 10 comporte, principalement, montée sur le châssis 12, un moteur pneumatique (non représenté) assurant, par l'intermédiaire d'un jeu de pignons, l'entraînement en rotation d'une broche porte-outil 14 autour d'un axe longitudinal.

Comme cela est classique, la broche porte-outil peut être montée sur un chariot déplaçable longitudinalement, lui-même monté sur une vis entraînée par un moteur électrique basse tension, par exemple un moteur pas à pas, de manière à piloter l'avance et le retrait de l'outil monté sur la broche 14.

Par ailleurs, le châssis 12 porte une unité de centrale de traitement 16 dans laquelle sont stockés des programmes de commande du fonctionnement de la machine et en particulier du moteur pneumatique et, le cas échéant, du moteur électrique, de manière à assurer le déroulement de cycles d'usinage, et ce, en fonction du type d'outil porté par la broche 14.

Sur la figure 1, par souci de clarté, seules la broche porte-outil 14 et l'unité centrale 16 ont été représentées.

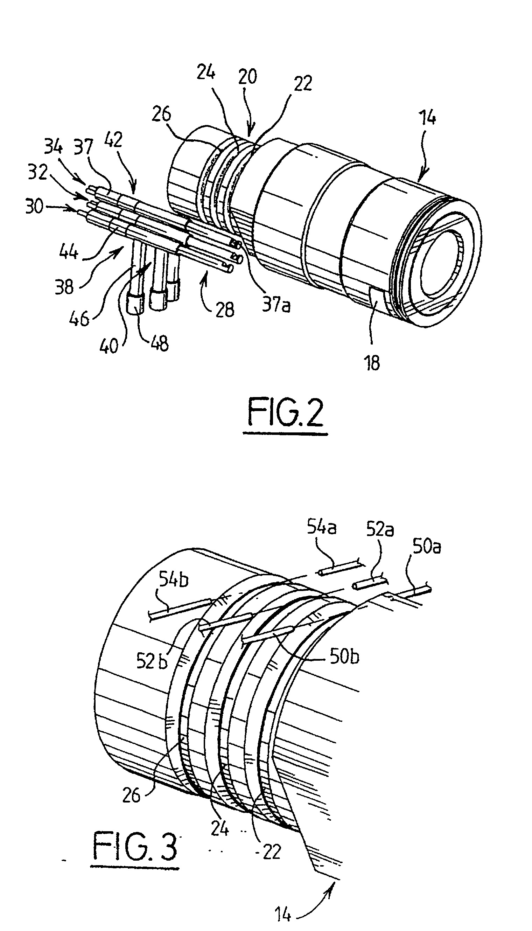

En se référant également à la figure 2, la broche porte-outil 14 porte, sur sa surface externe, un code visuel 18, se présentant par exemple sous la forme de marques répertoriées, permettant d'indiquer à un opérateur le type d'outil qu'il convient de monter sur la broche 14.

Par ailleurs, la broche 14 comporte des moyens de codage 20 supplémentaires se présentant sous la forme de gorges annulaires 22, 24 et 26 prévues au voisinage de la zone par laquelle elle vient se monter sur l'arbre de la machine.

Les gorges 22, 24 et 26 constituent un code optique. Elles sont associées à des moyens de lecture 28 de ce code, constitués par des moyens de détection à distance des gorges 22, 24 et 26.

Comme on le voit en particulier sur la figure 2, les moyens de lecture 28 comportent des ensembles de fibres optiques 30, 32 et 34 destinés chacun à la détection d'une gorge.

Pour ce faire, l'extrémité libre de chacune des fibres optiques est tournée vers un emplacement prévu pour l'une des gorges, l'extrémité opposée étant raccordée à un connecteur 36 de l'unité centrale 16 (figure 1).

Les ensembles de fibres optiques 30, 32 et 34 sont chacun placés dans une gaine de protection, telle que 37 dans laquelle est ménagé un trou latéral 37a pour le passage de la lumière, et sont montés axialement déplaçables dans un fourreau 38, 40, 42 dont l'une des branches, telle que la branche 44 du fourreau 38, reçoit les fibres optiques 30 et dont l'autre branche, 46, reçoit, par exemple, une vis 48 permettant le blocage en position des fibres optiques.

Les ensembles de fibres optiques 30, 32, 34 comportent en fait chacun une fibre émettrice et une fibre réceptrice ou de lecture de la lumière émise par la fibre émettrice et réfléchie par la surface de la broche 14.

Selon le mode de réalisation représenté à la figure 3, aux gorges 22, 24, 26 de la broche 14 sont associées des fibres optiques d'éclairement 50a, 52a, 54a et des fibres optiques de lecture 50b, 52b, 54b.

Chaque fibre optique d'éclairement 50a, 52a, 54a, et sa fibre optique 50b, 52b, 54b de détection ou de lecture de la présence d'une gorge 22, 24, 26 sont montées en regard l'une de l'autre à une distance de l'axe de la broche 14 comprise entre la distance audit axe du fond de la gorge correspondante et celle de la surface périphérique externe de la broche 14.

Ainsi dans le cas de la présence d'une gorge dans le faisceau lumineux émis par l'une des fibres 50a, 52a, 54a, il y a éclairement direct de la fibre optique de lecture 50b, 52b, 54b correspondante et en cas d'absence de gorge il y a masquage par la broche 14 de la lumière émise par la fibre d'éclairement de sorte que la fibre de lecture correspondante n'est pas éclairée.

Comme on le conçoit, la présence d'une gorge 22, 24 et 26 provoque une modification consécutive de l'intensité lumineuse du signal optique transmis par la fibre optique de lecture correspondante, à l'unité centrale 16.

Après traitement, notamment par filtrage, et comparaison des signaux optiques avec un seuil de détection de gorge, cette dernière élabore un mot.

Par exemple, dans l'exemple représenté sur la figure 2, dans lequel la broche porte-outil 14 comporte trois gorges, le mot élaboré par l'unité centrale de traitement 16 est « 111 » .

Au contraire, une absence de gorges se traduit par l'élaboration d'un mot « 000 ». Comme on le conçoit, un tel mot est interprété comme une absence de broche porte-outil.

Après élaboration du mot, l'unité centrale 16 procède, à l'aide d'un algorithme approprié, à une comparaison du mot avec un ensemble de mots stockés en mémoire et correspondant chacun, d'une part, à un type d'outil d'usinage monté sur la broche porte-outil, qui correspond au type d'outil indiqué par le code visuel 18, et, d'autre part, à un programme d'usinage qui est adapté à l'outil.

L'unité 16 sélectionne alors automatiquement le programme d'usinage qui correspond au type d'outil indiqué par le code visuel 18.

Le programme ainsi récupéré est alors lancé pour procéder à l'usinage d'une pièce.

Dans l'exemple de réalisation qui vient d'être décrit, dans lequel la broche porte outils est dotée de trois gorges et les moyens de lecture 28 comportent trois fibres optiques, sept programmes d'usinage, qui correspondent chacun à un type d'outil spécifique, peuvent être lancés.

On conçoit cependant que la broche 14 peut être dotée d'un nombre supérieur ou inférieur de telles gorges, en fonction du nombre d'outils que la machine est capable de recevoir. Bien entendu, dans ce cas, on prévoit un nombre de fibres optiques correspondant.

On conçoit que l'invention qui vient d'être décrite, qui utilise des moyens de détection sans contact des gorges permet de s'affranchir de toute variation de diamètre des broches porte-outil.

De manière plus générale, on peut utiliser tous reliefs pour former le code optique, par exemple des gorges, des saillies et des combinaisons de celles-ci.

Il a en outre été constaté que l'utilisation de moyens de codage se présentant sous la forme d'un code optique et de moyens de détection comportant des fibres optiques permet une détection efficace du type d'outil porté par la broche, même en cas de présence de salissures sur la surface de la broche portant le code 18.

Bien que dans les exemples décrits précédemment l'invention s'applique à une machine d'usinage pneumatique, on comprend aisément qu'elle puisse s'appliquer à toute machine d'usinage utilisant une multiplicité d'outils et contenant dans son unité centrale de traitement des programmes adaptés aux différents outils utilisés.

Dans d'autres variantes non-représentées, les moyens de codage et les moyens de lecture peuvent être magnétiques plutôt qu'optiques, ce qui permet également d'assurer une détection efficace du type d'outil porté par la broche, même en cas de présence de salissures.

## Revendications

1. Machine d'usinage comprenant une broche porte-outil (14), des moyens moteurs assurant l'entraînement de la broche et, une unité centrale (16) dans laquelle sont stockés des programmes de commande des moyens moteurs pour le déroulement de cycles d'usinage en fonction du type d'outil porté par la broche (14), **caractérisée en ce que** ladite broche est dotée de moyens de codage (20) du type d'outil qu'elle porte et la machine est pourvue de moyens de lecture (28) des moyens de codage raccordés à l'unité centrale (16) pour fournir à cette dernière des informations portant sur l'outil monté sur la broche, et **en ce que** l'unité centrale comporte en outre des moyens de sélection parmi les programmes stockés dans l'unité centrale du programme correspondant à l'outil porté par la broche et dont les moyens de codage sont lus par les moyens de lecture.

2. Machine selon la revendication 1, **caractérisée en ce que** les moyens de codage sont agencés sous la forme d'un ensemble de gorges (22, 24, 26) annulaires ménagées sur la surface périphérique de la broche (14) et **en ce que** les moyens de lecture (28) sont constitués par des moyens de détection sans contact desdites gorges.

3. Machine selon la revendication 2, **caractérisée en ce que** les moyens de lecture (28) des moyens de codage comportent un réseau de fibres optiques (30, 30, 32, 50a, 50b, 52a, 52b, 54a, 54b) tournées vers les gorges et destinées à la détection de la présence desdites gorges sur la broche (14).

4. Machine selon la revendication 3, **caractérisée en ce que** le réseau de fibres optiques comprend des fibres optiques (50b, 52b, 54b) de détection de la présence desdites gorges et à chacune desquelles est associée une fibre optique (50a, 52a, 54a) d'éclairement de la surface périphérique de la broche (14) portant lesdites gorges (22, 24, 26).

5. Machine suivant la revendication 4, **caractérisée en ce que** chaque fibre optique d'éclairement associée à une fibre optique de détection de la présence d'une gorge (22, 24, 26) est montée en faisceau avec la fibre optique de détection associée et assure son éclairement par réflexion sur la surface périphérique de la boche (14).

6. Machine suivant la revendication 4, **caractérisée en ce que** chaque fibre optique (50a, 52a, 54a) d'éclairement et sa fibre optique (50b, 52b, 54b) de détection de la présence d'une gorge (22, 24, 26) sont montées en regard l'une de l'autre à une distance de l'axe de la broche (14) comprise entre la distance audit axe du fond de la gorge (22, 24, 26) correspondante et celle de la surface extérieure de la broche (14).

7. Machine selon l'une des revendications 3 à 6, **caractérisée en ce que** les moyens de sélection comprennent dans l'unité centrale (16) des moyens de comparaison entre un mot élaboré à partir du signal véhiculé par le réseau de fibres optiques et un ensemble de mots stockés en mémoire dans l'unité centrale correspondant chacun à un type d'outil d'usinage et à chacun desquels est associé un programme d'usinage correspondant.

8. Machine selon la revendication 7, **caractérisée en ce qu'**elle comporte trois fibres optiques (50a, 52a, 54a, 50b, 52b, 54b) pour l'élaboration d'un mot de trois chiffres binaires servant à piloter le déroulement de programmes d'usinage correspondants.

9. Machine selon l'une des revendications 1 à 8, **caractérisée en ce que** la broche (14) porte-outil comporte en outre un code visuel (18) destiné à indiquer à un opérateur le type d'outil à monter sur la broche, le type d'outil indiqué par le code visuel correspondant au type d'outil codé par les moyens de codage.

10. Machine selon l'une quelconque des revendications précédentes, **caractérisé en ce que** les moyens moteurs assurent l'avance de la broche porte-outil (14) et les programmes de commande sont des programmes de commande de l'avance de la broche porte-outil (14).

## Claims

1. A machining centre comprising a tool-carrying spindle (14), motive means ensuring the drive of the spindle, and a central unit (16) in which programs are stored for controlling the motive means for the implementation of machining cycles according to the type of tool carried by the spindle (14), **characterised in that** said spindle is endowed with means (20) for coding the type of tool that it carries and the machine is provided with means (28) for reading the coding means, which are connected to the central unit (16) in order to supply information to said central unit relating to the tool mounted on the spindle and **in that** the central unit comprises, in addition, means for selecting from among the programs stored in the central unit the program corresponding to the tool carried by the spindle, the coding means of which are read by the reading means.

2. Machine according to Claim 1, **characterised in that** the coding means are arranged in the form of a set of annular grooves (22, 24, 26) provided on the peripheral surface of the spindle (14) and **in that** the reading means (28) are constituted by non-contacting means for detecting said grooves.

3. Machine according to Claim 2, **characterised in that** the means (28) for reading the coding means comprise a network of optical fibres (30, 30, 32, 50a, 50b, 52a, 52b, 54a, 54b) directed towards the grooves and intended for detecting the presence of said grooves on the spindle (14).

4. Machine according to Claim 3, **characterised in that** the network of optical fibres comprises optical fibres (50b, 52b, 54b) for detecting the presence of said grooves, with each of which there is associated an optical fibre (50a, 52a, 54a) for illuminating the peripheral surface of the spindle (14) bearing said grooves (22, 24, 26).

5. Machine according to Claim 4, **characterised in that** each illumination optical fibre associated with an optical fibre for detecting the presence of a groove (22, 24, 26) is arranged in a bundle with the associated detection optical fibre and ensures the illumination of said detection optical fibre by reflection on the peripheral surface of the spindle (14).

6. Machine according to Claim 4, **characterised in that** each illumination optical fibre (50a, 52a, 54a) and its optical fibre (50b, 52b, 54b) for detecting the presence of a groove (22, 24, 26) are mounted opposite one another at a distance from the axis of the spindle (14) lying between the distance to said axis from the bottom of the corresponding groove (22, 24, 26) and that from the exterior surface of the spindle (14).

7. Machine according to one of Claims 3 to 6, **characterised in that** the selection means comprise in the central unit (16) means for comparison between a word that has been generated on the basis of the signal transported by the network of optical fibres and a set of words stored in the memory of the central unit, each corresponding to a type of machining tool, with each of which a corresponding machining program is associated.

8. Machine according to Claim 7, **characterised in that** it comprises three optical fibres (50a, 52a, 54a, 50b, 52b, 54b) for generating a word of three binary digits serving to monitor the progress of corresponding machining programs.

9. Machine according to one of Claims 1 to 8, **characterised in that** the tool-carrying spindle (14) comprises, in addition, a visual code (18) which is intended to indicate to an operator the type of tool to be mounted on the spindle, whereby the type of tool indicated by the visual code corresponds to the type of tool coded by the coding means.

10. Machine according to any one of the preceding claims, **characterised in that** the motive means ensure the advance of the tool-carrying spindle (14) and the control programs are programs for controlling the advance of the tool-carrying spindle (14).

## Patentansprüche

1. Bearbeitungsmaschine, umfassend eine Werkzeughalterspindel (14), Antriebsmittel zum Antreiben der Spindel, und eine Zentraleinheit (16), in der Steuerprogramme für die Antriebsmittel gespeichert sind, um den Ablauf der Bearbeitungsfolge abhängig vom Werkzeugtyp zu steuern, der von der Spindel (14) getragen wird, **dadurch gekennzeichnet, dass** die besagte Spindel mit Kodierungsmitteln (20) für den Werkzeugtyp versehen ist, der von ihr getragen wird, und die Maschine mit Lesemitteln (28) zum Lesen der Kodierungsmittel versehen ist, die mit der Zentraleinheit (16) verbunden sind, um diese mit Informationen über den an der Spindel montierten Werkzeugtyp zu versorgen, und dass die Zentraleinheit außerdem Wählmittel umfasst, um aus den in der Zentraleinheit gespeicherten Programmen das Programm zu wählen, das dem von der Spindel getragenen Werkzeugtyp entspricht und dessen Kodierungsmittelwon den Lesemitteln gelesen wurde.

2. Maschine nach Anspruch 1, **dadurch gekennzeichnet, dass** die Kodierungsmittel in Form einer Gruppe von Ringnuten (22, 24, 26) vorliegen, die auf der Umfangsflache der Spindel (14) vorgesehen sind, und dass die Lesemittel (28) durch kontaktlose Erkennungsmittel für diese Nuten gebildet werden.

3. Maschine nach Anspruch 2, **dadurch gekennzeichnet, dass** die Lesemittel (28) zum Lesen der Kodierungsmittel ein Netz aus optischen Fasern (30, 30, 32, 50a, 50b, 52a, 52b, 54a, 54b) umfassen, die zu den Nuten hin gebogen sind, um das Vorhandensein dieser Nuten auf der Spindel (14) zu erkennen.

4. Maschine nach Anspruch 3, **dadurch gekennzeichnet, dass** das Netz aus optischen Fasern optische Fasern (50b, 52b, 54b) zum Erkennen des Vorhandenseins der Nuten umfasst, die jeweils mit einer optischen Faser (50a, 52a, 54a) zum Beleuchten der die Nuten (22, 24, 26) tragenden Umfangsfläche der Spindel (14) kombiniert sind.

5. Maschine nach Anspruch 4, **dadurch gekennzeichnet, dass** jede optische Beleuchtungsfaser, die mit einer optischen Faser zum Erkennen des Vorhandenseins einer Nut (22, 24, 26) kombiniert ist, mit der zugehörigen optischen Erkennungsfaser gebündelt ist und deren Beleuchtung durch Reflektion auf der Umfangsfläche der Spindel (14) gewährleistet.

6. Maschine nach Anspruch 4, **dadurch gekennzeichnet, dass** jede optische Beleuchtungsfaser (50a, 52a, 54a) und ihre optische Faser (50b, 52b, 54b) zum Erkennen des Vorhandenseins einer Nut (22, 24, 26) einander gegenüberstehend in einem Abstand von der Achse der Spindel (14) angeordnet sind, der zwischen dem Abstand dieser Achse vom Boden der entsprechenden Nut (22, 24, 26) und dem von der Außenfläche der Spindel (14) liegt.

7. Maschine nach einem der Ansprüche 3 bis 6, **dadurch gekennzeichnet, dass** die Wählmittel der Zentraleinheit (16) Vergleichsmittel umfassen, um ein Wort, das dem vom Netz aus optischen Fasern übertragenen Signal entsprechend ausgegeben wurde, mit einer Gruppe von Wörtern zu vergleichen, die im Speicher der Zentraleinheit gespeichert sind und jeweils einem Bearbeitungswerkzeugtyp entsprechen, und die jeweils mit einem entsprechenden Bearbeitungsprogramm verknüpft sind.

8. Maschine nach Anspruch 7, **dadurch gekennzeichnet, dass** sie drei optische Fasern (50a, 52a, 54a, 50b, 52b, 54b) umfasst, um ein aus drei Binarzahlen bestehendes Wort auszugeben, das dazu dient, den Ablauf des entsprechenden Bearbeitungsprogramms zu steuern.

9. Maschine nach einem der Ansprüche 1 bis 8, **dadurch gekennzeichnet, dass** die Werkzeughalterspindel (14) darüber hinaus einen optischen Kode (18) umfasst, der einer Bedienungsperson den an die Spindel zu montierenden Werkzeugtyp anzeigt, wobei der von diesem optischen Kode angezeigte Werkzeugtyp dem Werkzeugtyp entspricht, der von den Kodierungsmittel kodiert wird.

10. Maschine nach einem der obigen Ansprüche, **dadurch gekennzeichnet, dass** die Antriebsmittel den Vorschub der Werkzeughalterspindel (14) gewährleisten und die Steuerprogramme Programme sind, die den Vorschub der Werkzeughalterspindel (14) steuern.
